# EUROPÄISCHE PATENTSCHRIFT

(11) **EP 2 665 689 B1**
(45) Veröffentlichungstag und Bekanntmachung des Hinweises auf die Patenterteilung: **15.03.2017**
(21) Anmeldenummer: 12700241.8
(22) Anmeldetag: 17.01.2012
(51) Int. Cl.: C04B 18/16, C04B 28/14

(54) **VERFAHREN ZUR WIEDERVERWENDUNG VON SCHLEIFSTAUB UND ABFALLMATERIAL VON GIPSKARTONPLATTEN**
METHOD FOR REUSING GRINDING DUST AND WASTE MATERIAL FROM GYPSUM PLASTERBOARDS
PROCÉDÉ DE RÉUTILISATION DE POUSSIÈRE DE MEULAGE ET DE DÉCHETS DE PLAQUES EN PLACOPLÂTRE

(30) Priorität: 17.01.2011 EP 11151146
(43) Veröffentlichungstag der Anmeldung: 27.11.2013
(73) Patentinhaber: Knauf Gips KG, 97346 Iphofen (DE)
(72) Erfinder: VOIGT, Wolfgang, 91593 Burgbernheim (DE); KLEEMANN, Anja, 74589 Satteldorf (DE); LIMMER, Bärbel, 90409 Nürnberg (DE)
(74) Vertreter: dompatent von Kreisler Selting Werner - Partnerschaft von Patent- und Rechtsanwälten mbB
(86) Internationale Anmeldenummer: PCT/EP2012/050632
(87) Internationale Veröffentlichungsnummer: WO 2012/098112

(56) Entgegenhaltungen:
- EP-A2- 0 163 963
- DE-A1- 2 658 915
- DE-A1- 10 336 569

## Beschreibung

Die vorliegende Erfindung betrifft ein Verfahren zur Wiederverwendung von Schleifstaub von Gipsfaserplatten und Abfallmaterial von Gipskartonplatten.

Gipsfaserplatten enthalten neben Gips Zellulosefasern. Im Gegensatz zu Gipskartonplatten ist zur Erreichung der notwendigen Stabilität keine Abdeckung der Hauptseiten durch Karton erforderlich.

Zur Herstellung von hochfesten Gipsfaserplatten wird ein Gipsbrei mit Fasern, insbesondere Zellulosefasern vermischt und geformt. Das entstandene Produkt wird dann durch Pressen entwässert und anschließend ausgehärtet.

Bei der weiteren Bearbeitung der erhaltenen Produkte fallen große Mengen Staub an, der durch Schneiden und Schleifen der Platten entsteht. Dieser wird im Folgenden zusammenfassend als Schleifstaub behandelt. Der Schleifstaub besteht aus Papierfasern sowie Mischungen von Gipsdihydrat und gegebenenfalls Gipshalbhydraten.

Es ist bereits versucht worden, Schleifstaub in das Verfahren zur Herstellung von Gipsfaserplatten zurückzuführen. Hochfeste Platten, so wie sie bei der Herstellung von Hohlraumbodenelementen verwendet werden, lassen dies bisher nicht zu. Der Schleifstaub führt zu einer signifikanten Verschlechterung der Entwässerungseigenschaften, so dass entsprechende Versuche fehlschlugen. Bei der Herstellung von Gipsfaserplatten wird der gewässerte Gipsbrei durch Pressen durch Siebe entwässert. Aufgrund der Feinteiligkeit des Schleifstaubes verschlechtert sich die Filtrationsleistung der Siebe, die Siebe setzen sich schneller zu.

EP 0 163 963 beschreibt ein Verfahren zur Verwertung von Abfallmaterial aus der Herstellung von Gipsprodukten. Die Behandlung erfolgt bei Temperaturen von etwa 50°C, so dass es allenfalls zur Bildung von Calciumsulfat-ß-Halbhydrat kommen kann. Dieses ß-Halbhydrat ist für die Herstellung von Gipsfaserplatten aufgrund seiner unstabilen Gipskorns und der damit verbundenen schlechten Plattenentwässerung nicht geeignet.

Schleifstaube mussten daher bisher deponiert werden. Da bei der Herstellung von Gipsfaserplatten entsprechender Schleifstaub in Mengen von Tausenden von Tonnen pro Jahr anfällt, ist dies unter Umweltschutzgesichtspunkten und wirtschaftlichen Gesichtspunkten wenig wünschenswert.

Bei der Herstellung von Gipskartonplatten fallen ebenfalls Abfälle an, z.B. durch Schneiden, Stanzen, etc.

Aufgabe der vorliegenden Erfindung war es, ein Verfahren bereit zu stellen, mit dem zumindest einige der genannten Nachteile des Standes der Technik überwunden werden können, insbesondere eine Wiederverwendung des Schleifstaubs und von Abfällen von Gipskartonplatten ermöglicht.

Gelöst wird die Aufgabe durch ein Verfahren mit folgenden Merkmalen:
Verfahren zur Wiederverwendung von Schleifstaub von Gipsfaserplatten und von Abfällen von Gipskartonplatten enthaltend Gips und Papierfasern umfassend die Schritte:
   - Korngrößenerhöhung des Gipses im Schleifstaub oder in den Abfällen auf eine mittlere Korngröße von 20 bis 60 µm durch Umwandlung in α-Gips;
   - Einbringen des in der Korngröße vergrößerten Gipses in einer Menge von 1 bis 50 Gew.-% bezogen auf den Gipsanteil in eine Gipszubereitung zur Herstellung von Gipsfaserplatten.

Erfindungsgemäß werden also Schleifstaub und Abfälle aus Gipskartonplatten verwendet. Durch das Verfahren wird die Korngröße des Gipses im Schleifstaub erhöht. Typischerweise fällt Schleifstaub in einer mittleren Korngröße von etwa 5 bis 15 µm an. Durch die erfindungsgemäße Behandlung wird seine Korngröße erhöht und die Zerfallsrate im Wasser reduziert.

Ebenfalls ist es mit diesem Verfahren möglich, Abfälle von Gipskartonplatten zu verwenden, ohne dass eine Abtrennung von Papier und Gips erfolgt. Auch hieraus kann ein α-Gips-Fasergemisch mit oben genannten Eigenschaften hinsichtlich der Kornstabilität und des Absaugverhaltens erzeugt werden.

Besonders geeignet ist eine Korngröße - nach Behandlung - im Bereich von 30 bis 50 µm.

Bei den erfindungsgemäß behandelten Materialien findet nicht ein einfaches Verkleben oder Verbacken von Partikeln statt, sondern es findet ein tatsächliches Kristallwachstum statt, durch das sich die Korngröße erhöht. Damit unterscheidet sich das erfindungsgemäße Verfahren von Verfahren, bei denen beispielsweise durch Verpressen größere Partikel erhalten werden.

Als mittlere Korngröße wird der d50 Wert bezeichnet, d.h. die Korngröße, bei der 50 Gew.-% des Gipses größer sind bzw. 50 Gew.-% kleiner sind als diese Korngröße.

Der auf diese Weise behandelte Gips kann anschließend wieder in eine Gipszubereitung zur Herstellung von Gipsfaserplatten eingebracht werden. Bezogen auf den Gipsanteil können 1 bis 50 Gew.-%, bevorzugt 1 bis 20 Gew.-% oder 10 bis 50 Gew.-% durch den erfindungsgemäß behandelten Gips ersetzt werden. Die weiteren Gipsanteile in der Gipszubereitung sind bevorzugt Naturgips oder REA-Gips.

Das Verfahren zur Korngrößenerhöhung ist die Umwandlung des Schleifstaubs bzw. der Abfallstoffe von Gipsbauplatten in α-Gips (Calciumsulfat-α-Hemihydrat). Diese Umwandlung ist dem Fachmann grundsätzlich bekannt. Sie kann als kontinuierlicher oder diskontinuierlicher Prozess durchgeführt werden. Einzelheiten können beispielsweise Ullmanns Enzyklopädie der Technischen Chemie, 4. neubearbeitete Auflage, Stichwort Gips, entnommen werden. Typischerweise wird α-Gips durch Anwendung von Wärme bei erhöhtem Druck erhalten. Im Vergleich zu Calciumsulfat-ß-Hemihydrat (ß-Gips) sind die Kristalle des α-Gipses kompakter, zerfallen nicht in Wasser und haben eine engere Korngrößenverteilung.

Bei trockenen Verfahren wird Gips durch Kontakt mit heißem Wasserdampf unter Druck behandelt. Die Reaktion benötigt im Autoklaven zwischen 3 und 24 h.

Bei Nassverfahren nutzt man aus, dass bei Temperaturen oberhalb von etwa 97°C aus einer Lösung von Calcium- und Sulfationen α-Hemihydrat auskristallisiert. Das erhaltene α-Hemihydrat kann abfiltriert und getrocknet werden.

In einer Ausführungsform der Erfindung wird der Schleifstaub vor seiner Umwandlung gewässert.

Bei der Umwandlung in α-Gips können Kristallisationstrachtverbesserer, beispielswiese Dicarbonsäuren oder Dicarbonsäurederivate, Aluminiumsulfate, Kaliumsulfate, einzeln oder in Kombination, etc. verwendet werden. Bei den Dicarbonsäuren eignen sich insbesondere Bernsteinsäure, Malonsäure, Glutarsäure und ihre Salze, beispielsweise Natriumsuccinate. Als Dicarbonsäurederivate können auch Ester, wie Bernsteinsäurediethylester, Maleinsäuredimethylester eingesetzt werden.

Bei dem erfindungsgemäßen Verfahren können in die Umwandlung auch Natur- oder REA-Gipse einbezogen werden.

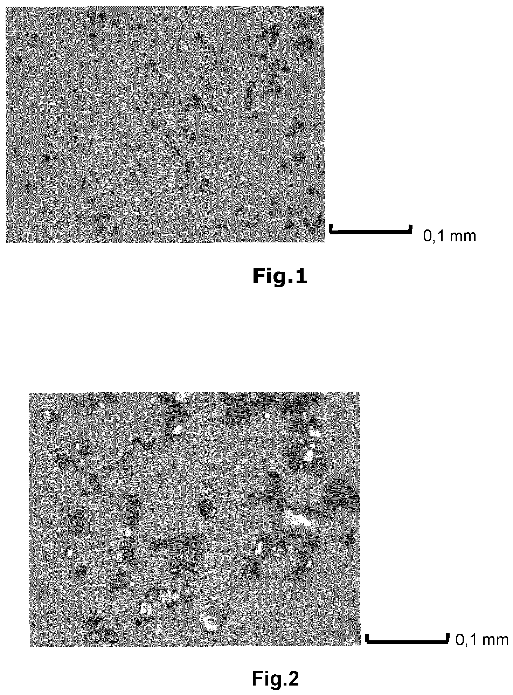

Figur 1 zeigt eine mikroskopische Aufnahme von unbehandeltem Schleifstaub (nach Entfernung von Papierfasern).
Figur 2 zeigt das Produkt gemäß Beispiel 1.

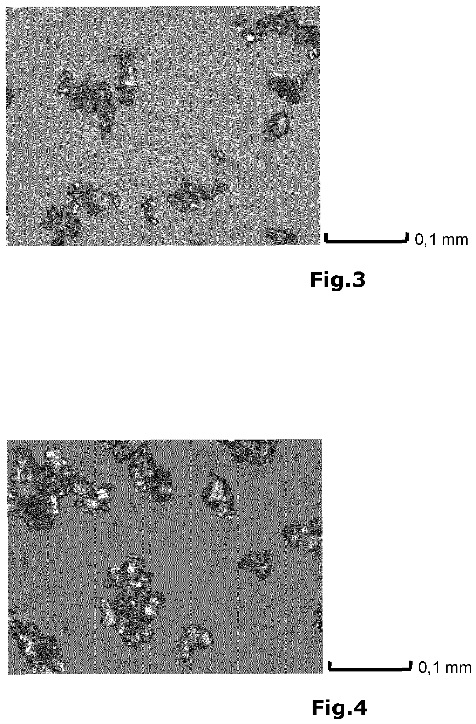

Figur 3 zeigt das Produkt gemäß Beispiel 2.
Figur 4 zeigt das Produkt gemäß Beispiel 3.

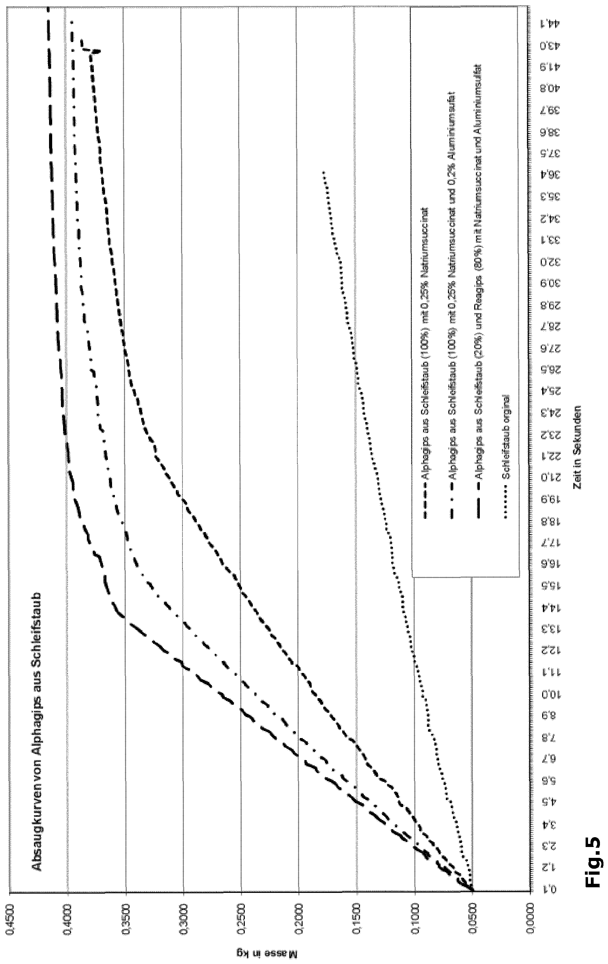

Figur 5 zeigt Absaugkurven der erfindungsgemäßen Materialien im Vergleich zum unbehandelten Schleifstaub.

Das Verfahren wird durch die folgenden Beispiele näher erläutert:

### Beispiel 1

2,5 kg Schleifstaub wurden über Nacht in destilliertem Wasser gerührt, anschließend mit 4 I destilliertem Wasser und 0,25 Gew.-% Natriumsuccinat versetzt. Die Suspension wurde in einem Laborautoklav autoklaviert. Die Behandlung erfolgte unter einem Druck von 2,5 bis 2,7 bar für ca. 2 h. Anschließend wurde die Suspension abfiltriert und die weitere Reaktion durch Waschen mit Aceton gestoppt und das Produkt getrocknet.

### Beispiel 2

2,5 kg Schleifstaub wurden über Nacht in destilliertem Wasser gerührt, anschließend mit 4 I destilliertem Wasser, 0,2 Gew.-% Aluminiumsulfat und 0,25 Gew.-% Natriumsuccinat versetzt. Die Suspension wurde in einem Laborautoklav autoklaviert. Die Behandlung erfolgte unter einem Druck von 2,5 bis 2,7 bar für ca. 2 h. Anschließend wurde die Suspension abfiltriert und die weitere Reaktion durch Waschen mit Aceton gestoppt und das Produkt getrocknet.

### Beispiel 3

0,5 kg Schleifstaub wurden über Nacht in destilliertem Wasser gerührt, anschließend mit 4 I destilliertem Wasser, 2,0 kg REA-Gips und 0,25 Gew.-% Natriumsuccinat versetzt. Die Suspension wurde in einem Laborautoklav autoklaviert. Die Behandlung erfolgte unter einem Druck von 2,5 bis 2,7 bar für ca. 2 h. Anschließend wurde die Suspension abfiltriert und die weitere Reaktion durch Waschen mit Aceton gestoppt und das Produkt getrocknet.

### Messung des Entwässerungsverhaltens

Die erhaltenen Produkte wurden hinsichtlich ihres Absaugverhaltens untersucht. Anhand der Absaugkurven kann das Entwässerungsverhalten beurteilt werden. Gemessen wird die Wasserabgabe in kg über die Zeit für eine 20 Gew.-%-ige Slurry aus dem jeweiligen Material.

Es zeigt sich, dass durch Zugabe von kleineren Mengen des umgewandelten Schleifstaubs das Absaugverhalten des normalen Gipses zur Herstellung von Gipsfaserplatten verbessert wird.

## Patentansprüche

1. Verfahren zur Wiederverwendung von Schleifstaub von Gipsfaserplatten oder Abfällen von Gipskartonplatten enthaltend Gips und Papierfasern umfassend die Schritte:
- Korngrößenerhöhung des Gipses im Schleifstaub oder in den Abfällen auf eine mittlere Korngröße von 20 bis 60 µm durch Umwandlung in α-Gips;
- Einbringen des in der Korngröße vergrößerten Gipses in einer Menge von 1 bis 50 Gew.-% bezogen auf den Gipsanteil in eine Gipszubereitung zur Herstellung von Gipsfaserplatten.

2. Verfahren nach Anspruch 1, **dadurch gekennzeichnet, dass** zur Umwandlung in α-Gips ein diskontinuierlicher Prozess verwendet wird.

3. Verfahren nach Anspruch 1, **dadurch gekennzeichnet, dass** zur Umwandlung in α-Gips ein kontinuierlicher Prozess verwendet wird.

4. Verfahren nach Anspruch 1 oder 2, **dadurch gekennzeichnet, dass** die mittlere Korngröße im Bereich von 30 bis 50 µm verwendet wird.

5. Verfahren nach mindestens einem der Ansprüche 1 bis 4, **dadurch gekennzeichnet, dass** die Menge an eingebrachtem Gips im Bereich von 5 bis 10 Gew.-% liegt.

6. Verfahren nach mindestens einem der Ansprüche 2 bis 5, **dadurch gekennzeichnet, dass** der Schleifstaub vor Umwandlung zu α-Gips gewässert wird.

7. Verfahren nach einem der Ansprüche 2 bis 6, **dadurch gekennzeichnet, dass** ein Kristallisationsverbesserer wie Dicarbonsäuren und Dicarbonsäurederivate, Aluminiumsulfate, Kaliumsulfate zugesetzt wird.

8. Verfahren nach mindestens einem der Ansprüche 1 bis 7, **dadurch gekennzeichnet, dass** die Umwandlung zusammen mit Natur- oder REA Gips durchgeführt wird.

9. Verfahren nach einem der Ansprüche 1 bis 8, **dadurch gekennzeichnet, dass** die Umwandlung zu α-Gips durch Autoklavieren erfolgt.

10. Verfahren nach einem der Ansprüche 1 bis 9, **dadurch gekennzeichnet, dass** der Schleifstaub durch Schneiden oder Schleifen von Gipsfaserplatten erhalten wird.

11. Verfahren zur Korngrößenerhöhung von Schleifstaub bzw. Abfallstoffen von Gipsbauplatten durch Umwandlung in Calciumsulfat α-Hemihydrat.

## Claims

1. A method for reusing grinding dust from gypsum fiberboards or waste material from gypsum plasterboards comprising gypsum and paper fibers, comprising the steps of:
- increasing the grain size of the gypsum in the grinding dust or in the waste to a mean grain size of 20 to 60 µm by converting it to α-gypsum;
- incorporating the gypsum with the increased grain size in an amount of from 1 to 50% by weight, based on the gypsum content, into a gypsum formulation for producing gypsum fiberboards.

2. The method according to claim 1, **characterized in that** a discontinuous process is used for the conversion to α-gypsum.

3. The method according to claim 1, **characterized in that** a continuous process is used for the conversion to α-gypsum.

4. The method according to claim 1 or 2, **characterized in that** the mean grain size in a range of from 30 to 50 µm is used.

5. The method according to at least one of claims 1 to 4, **characterized in that** the amount of incorporated gypsum is within a range of from 5 to 10% by weight.

6. The method according to at least one of claims 2 to 5, **characterized in that** the grinding dust is watered before being converted to α-gypsum.

7. The method according to any of claims 2 to 6, **characterized in that** a crystallization enhancer, such as dicarboxylic acids and dicarboxylic acid derivatives, aluminum sulfates, potassium sulfates, is added.

8. The method according to at least one of claims 1 to 7, **characterized in that** the conversion is performed together with natural gypsum or gypsum from flue gas desulfurization.

9. The method according to any of claims 1 to 8, **characterized in that** said conversion to α-gypsum is performed by autoclaving.

10. The method according to any of claims 1 to 9, **characterized in that** said grinding dust is obtained by the cutting or grinding of gypsum fiberboards.

11. A process for increasing the grain size of grinding dust or waste material from gypsum boards by conversion to calcium sulfate α-hemihydrate.

## Revendications

1. Procédé de réutilisation de poussière de meulage de plaques de plâtre fibreuses ou de déchets de plaques de parement en plâtre contenant du plâtre et des fibres de papier, le procédé comprenant les étapes suivantes consistant à :
- augmenter la taille des particules de plâtre dans la poussière de meulage ou dans les déchets jusqu'à une taille de particules moyenne de 20 à 60 µm par transformation plâtre Alpha ;
- introduire du plâtre de taille de particules agrandie dans une quantité de 1 à 50% en poids par rapport à la proportion de plâtre dans une préparation de plâtre pour la fabrication de plaques de plâtre fibreuses.

2. Procédé selon la revendication 1, **caractérisé en ce qu'**un procédé discontinu est utilisé pour la transformation en plâtre Alpha.

3. Procédé selon la revendication 1, **caractérisé en ce qu'**un procédé continu est utilisé pour la transformation en plâtre Alpha.

4. Procédé selon la revendication 1 ou 2, **caractérisé en ce que** la taille de particules moyenne est utilisée dans la gamme de 30 à 50 µm.

5. Procédé selon au moins une des revendications 1 à 4, **caractérisé en ce que** la quantité de plâtre incorporé est dans la gamme de 5 à 10% en poids.

6. Procédé selon au moins une des revendications 2 à 5, **caractérisé en ce que** la poussière de meulage est hydratée avant la conversion en plâtre Alpha.

7. Procédé selon l'une des revendications 2 à 6, **caractérisé en ce qu'**on ajoute un agent d'amélioration de cristallisation tel que des acides dicarboxyliques et des dérivés d'acides dicarboxyliques, du sulfate d'aluminium, du sulfate de potassium.

8. Procédé selon au moins l'une des revendications 1 à 7, **caractérisé en ce que** la transformation est réalisée en même temps que du plâtre naturel ou du plâtre de sulfuration de gaz de fumée.

9. Procédé selon l'une des revendications 1 à 8, **caractérisé en ce que** la transformation en plâtre Alpha est effectuée par autoclavage.

10. Procédé selon l'une des revendications 1 à 9, **caractérisé en ce que** la poussière de meulage est obtenue par découpage ou meulage de plaques de plâtre fibreuses.

11. Procédé d'augmentation de la taille de particules de poussière de meulage ou de déchets de plaques de plâtre par transformation en sulfate de calcium Alpha semi-hydraté.
